# EUROPEAN PATENT SPECIFICATION

(11) **EP 2 775 126 B1**
(45) Date of publication and mention of the grant of the patent: **16.05.2018**
(21) Application number: 13158103.5
(22) Date of filing: 07.03.2013
(51) Int. Cl.: F02D 41/00, F02D 41/12, F02D 41/14

(54) **Method for controlling an internal combustion engine and internal combustion engine**
Verfahren zur Steuerung einer Brennkraftmaschine und Brennkraftmaschine
Procédé pour commander un moteur à combustion interne et moteur à combustion interne

(43) Date of publication of application: 10.09.2014
(73) Proprietor: FPT Industrial S.p.A., 10156 Torino (IT)
(72) Inventor: D'Epiro, Clino, 10091 Alpignano (IT); Dellora, Giancarlo, 10134 Torino (IT)
(74) Representative: Franzolin, Luigi

(56) References cited:
- EP-A1- 1 985 829
- WO-A2-2006/017870
- DE-A1-102008 019 945
- DE-A1-102011 108 243
- US-A1- 2006 032 684
- US-A1- 2007 213 177

## Description

### Application field of the invention

The present invention refers to the field of methods for controlling internal combustion engines, in particular with the aim to reduce fuel consumption, and to an internal combustion engine configured to implement the aforementioned method.

### Description of the prior art

Different strategies are known to reduce fuel consumption. One of the most widespread strategy is to have a high gear ratio, so that the internal combustion engine can work with the lowest possible speed at predefined cruising speeds and a higher delivered torque, thus in an area of the engine map having more favorable specific consumptions.

This, however, implies a reduction of engine elasticity, since it reduces the reserves of torque that are necessary to face slopes. In the attempt of overcoming such drawback, the number of gears have been increased or, in the cases where it is not possible, new fast shifting transmissions have been designed, for example of the dual clutch type.

Such solution is not satisfying, due to the high purchase and maintenance costs of the transmission, but above all to the fact that the average engine load cannot be increased too much, otherwise the overall dynamic qualities of the vehicle are significantly reduced.

Furthermore, an engine equipped with long gearbox ratios uses necessarily a smaller turbosupercharger to have a faster response at lower revolutions per minute. This implies an excessive counter-pressure at the exhaust at high revolutions per minute, with power losses and an increase of fuel consumption.

EP1985829 discloses a solution to reduce fuel based on the activation/deactivation of the combustion engine in a neighborhood of a preset speed selected by the driver in order to save fuel while deactivation accurs.

Another innovation which has brought a high fuel saving is the STOP&START, which allows to stop the engine in predetermined conditions when the vehicle is stopped, for example when it is waiting at a traffic light.

Also this solution is not satisfying for vehicles, such as commercial vehicles, spending most of their active life travelling at constant cruising speed on highways.

### Summary of the invention

Therefore, the aim of the present invention is to identify a method for controlling an internal combustion engine that allows a further reduction of fuel consumption.

A method for controlling an internal combustion engine and an internal combustion engine are the object of the present invention.

It is a further object of the present invention an internal combustion engine specifically adapted to implement the aforementioned method.

The claims are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows an "island-shaped" BSFC (Brake Specific Fuel Consumption) diagram according to the prior art,
figure 2 shows a diagram over time of the control method according to the present invention,
figure 3 shows the effects of the method of figure 2 in the diagram of figure 1,
figures 4 and 5 show diagrams of preferred alternative embodiments of internal combustion engines adapted to implement the present method,
figure 6 shows another diagram of another preferred alternative embodiment of an internal combustion engine realizing the aforementioned method, applied to a vehicle equipped with four wheels.

In the figures the same reference numbers and letters identify the same elements or components.

### Detailed description of preferred embodiments of the invention

The method that is object of the invention is described hereinafter, which allows to perform a continuous control of the internal combustion engine, of an automobile, of a commercial or a heavy vehicle or of a ship, etc..

According to the present invention, the engine is required to deliver a torque fluctuating continuously around a desired value, corresponding to a position of the accelerator pedal or lever, so that the variation of the average cruising speed is not significant.

This is sufficient to determine a reduction of fuel consumption.

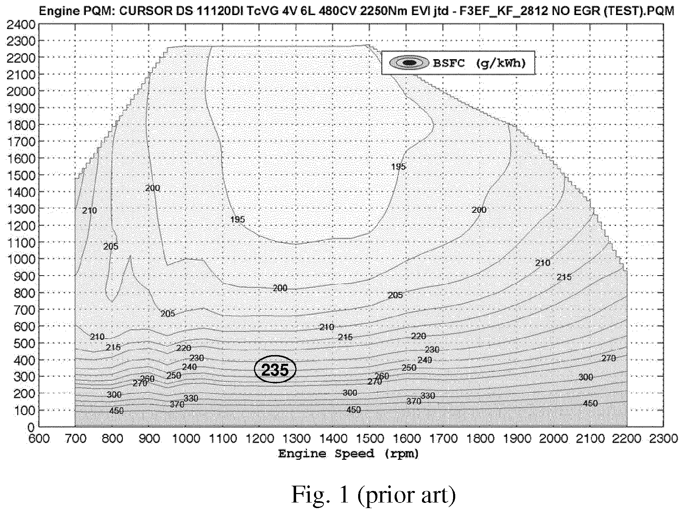

Such effect is now described with the help of a "island-shaped" BSFC (Brake Specific Fuel Consumption) diagram of the specific fuel consumption of an internal combustion engine, see figure 1.

The revolutions per minute of the engine are indicated on the x-axis. The torque delivered by the engine is indicated on the y-axis. Curve lines represent the iso-consumption curves.

In particular, figure 1 refers to an engine of the type CURSOR TcVG 4V 6L with 480CV and a maximum torque of 2250Nm.

It is possible to notice that by moving upwards, namely for an increasing delivered torque, from any point on the x-axis, the specific consumption decreases.

For example, at a typical vehicle cruising speed of about 85 km/h, the engine runs at about 1250 rpm with a specific consumption of 235 g/KWh and a torque of about 400 Nm. Such torque is necessary to overcome both the engine internal friction, and the vehicle aerodynamic friction, and the frictions deriving from the driveline, including the rolling friction of the tyres.

According to the present invention, the engine is controlled in an "impulse" way, namely alternating the delivery of a higher torque than desired with a delivery of a lower torque. Once a desired torque has been identified, corresponding to a position of the accelerator, according to the present invention such desired torque does not correspond to a fixed value of torque delivered by the engine, but to an average value over time between a much higher torque value than the desired torque, for example higher than 70% of the highest torque, and a value of the torque equal to zero.

Such alternations, if they are sufficiently fast, do not determine significant variations of the vehicle speed.

By virtue of the present invention, it is possible to force the engine to work in areas with low specific consumption, immediately after the cut-off. The latter condition implies the full cut-off of the engine fuel supply, namely zero torque and zero consumption. As an alternative, the engine is disconnected from the driveline and is kept running at idle.

For convenience, in the following, active phase will indicate the phase wherein the engine delivers torque and passive phase will indicate the phase wherein the engine is in the cut-off condition.

In the following, duty cycle will indicate the ratio over time between active phase and passive phase.

The frequency of the alternation between active phase and passive phase can be controlled in order to limit the vehicle speed variation within 1-3 km/h. On the one hand a too frequent alternation of active phase and passive phase is not appropriate, since it implies having to overcome the internal inertia of the engine too frequently, both during the starting and during the passage from the idle condition to a condition of torque delivery. On the other hand, too slow alternations cause significant speed variations around the average value. Thus the switching frequency between the phases is a trade-off between at least these aspects.

Advantageously, in heavy vehicles, namely having a particularly relevant mass, the switching frequency can be kept low, by exploiting the vehicle inertia opposing to speed variations. Thus variations of 1 - 3 km/h can be considered as tolerable, although it is possible to operate different choices.

The average length of the active phase with respect to the average length of the passive phase depend, instead, on the desired torque value ET and on the delivered torque value TAF in the active phase.

For example, when a vehicle is very loaded and has to face a certain slope, it can require a desired torque to the engine, equal, for example, to 70% of the maximum torque. If the active phase requires a torque delivery equal to 100% of the maximum torque, than the necessary duty cycle is equal to 0.7.

On the contrary, if the torque delivered in the active phase is equal to 80% of the maximum torque, than the necessary duty-cycle is equal to 0.7/0.8 = 0.875.

According to a preferred alternative embodiment of the invention, the value of the torque delivered in the active phase can vary as a function of the desired torque and/or of the torque corresponding to the lower specific consumption of the engine, that can be identified, for example, by the diagram of figure 1.

For example, when the desired torque is lower than 50% of the maximum torque, the torque delivered in the active phase can be limited to 70-80% of the maximum torque, in order to limit the grade of smoke of the engine and to confine the active phase in the lower specific consumption area, which usually corresponds to such torque percentages. It is evident that if the present method is implemented in an engine having lower specific consumptions for different torque percentage values (referred to the maximum torque), the delivered torque in the active phase would be consequently varied, for example during the implementation of the present method.

When, on the contrary, the desired torque exceeds such threshold of 50%, then not only the duty cycle tends to increase, but also the value of the delivered torque in the active phase may proportionally increase.

It is anyway preferable to increase the duty cycle rather than the delivered torque in the active phase, in order to obtain a lower average specific consumption, until, of course, switching times become prohibitive for the dynamics at stake.

Indeed, once a further threshold is exceeded, for example of 70%, the present method is temporarily inhibited in order to avoid power cuts to the engine in critical conditions.

The present method can be further inhibited when, for example, a learning process is taking place, or until the ATS (After Treatment System) reaches a minimum temperature level to allow the natural regeneration of the filters.

According to another aspect of the invention, the present technique can be applied both when the vehicle is travelling at a constant speed and when it is accelerating. In case of acceleration, a duty cycle is obtained which first favors the active phase and then stabilizes at a constant value calculated as shown above.

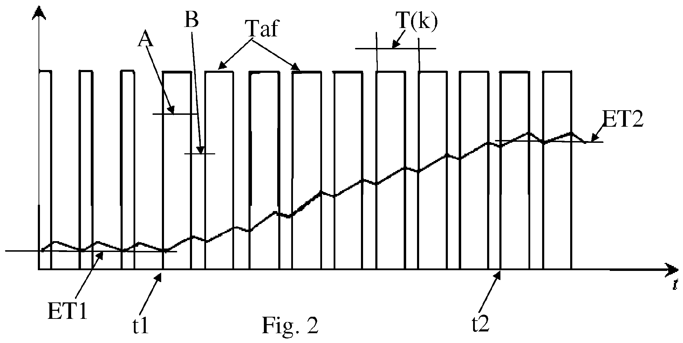

Figure 2 shows an example of application of the present method. The diagram shows the torque on the γ-axis and the time on the x-axis.

In the left part of the diagram, the duty cycle is constant and it is relatively low, since the desired torque ET1 is low. In the instant t1, the driver of the vehicle starts to increase the pressure on the accelerator pedal, towards a desired torque ET2, higher than ET1.

It can be noticed immediately that the duty cycle increases according to steps that become more and more frequent up to the instant t2, wherein the duty cycle stabilizes so that the engine delivers ET2 in average.

The application of the present method corresponds to a modulation of the delivered torque between an active phase and a passive phase according to a curve, for example a stepped curve of the ON/OFF type.

The modulating function for controlling the delivery of the torque can be appropriately varied. A modulating function can have a constant switching frequency or a variable one and it is preferably variable as a function of the average speed of the vehicle and/or of the overall weight W of the vehicle (f(v,W)). Also a saw-tooth-shaped profile or other profiles can be adopted. In particular, the length A of the active phase is a function of the desired torque, while the length B of the passive phase is inversely proportional to the desired torque ET1, ET2, etc. and proves to be complementary to B when the time T is constant.

The profile of the modulating curve can be chosen, for example, by taking into account the internal inertia of the engine, thus avoiding to inject too much fuel in the cylinders and to risk that the fuel does not burn correctly. Thus, the profile of the steps can be appropriately rounded, in order to limit the grade of smoke of the vehicle.

In figure 2, T indicates a period of the aforementioned modulating function. In the figure, T is constant, but it is not excluded that it can vary, being T =1/f.

Thus the modulating function can be either periodic or aperiodic.

According to a preferred alternative embodiment of the invention, said period can vary from a fraction of a second to some seconds, for example 5-6 seconds.

While experimenting the present method it has been understood that the delivery of torque by the engine, namely the engine fuel supply, can be controlled by a PWM (Pulse-width modulation) technique, which is usually used in static converters to transform alternate current into direct current. It is evident that there is no connection between the known use of such technique with the use described now, in particular because the respective technical fields are completely separated and the specific consumption diagrams shown above do not exist in the electrical engineering field.

In the present application of the PWM technique, the engine fuel supply affects the torque delivered by the engine itself, thus the two aspects can be confused.

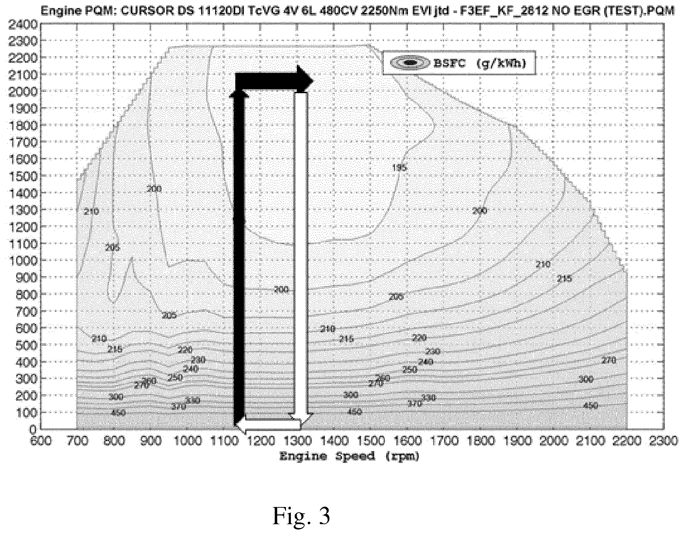

With reference to figure 3, it is now described what happens in terms of torque delivery on the diagram of figure 1, during a period T.

With the aim to make the procedure that is object of the present invention more understandable, the cycle has been extended on the x-axis. While, in fact, a variation of a few tens of rpm is enough. In the following it will be shown that it is even not necessary to induce a variation of the speed of rotation of the engine.

The dark vertical arrow pointing upwards identifies an initial moment of the active phase, wherein the torque delivered by the engine increases immediately without provoking a variation of the engine revolutions. The following dark horizontal arrows points towards an increasing variation of engine revolutions. In other words, the torque being constant, the vehicle accelerates. At the end of the active phase, the cut-off, namely the passive phase, intervenes and the engine fuel supply is cut. The delivered torque drops immediately to zero, according to the white vertical arrow pointing downwards and, subsequently, the engine, driven in rotation by the driveline, slows down according to the white horizontal arrow which points toward decreasing speeds of the engine. In order to understand the advantages that can be obtained by the present method, a reference vehicle is considered as travelling at a cruising speed of about 85 km/h carrying such a load that requires the delivery of about 75% of the maximum torque delivered by the engine.

Such operating condition, which, unfortunately, is far from the everyday reality, except when travelling uphill, represents an optimal point of use of the engine, wherein there is substantially a low fuel specific consumption (BMEP) and the engine is far from the maximum operating conditions.

It is evident that in conditions of lower delivered torque the fuel specific consumption increases.

By virtue of the present invention, in conditions with less load, namely with delivered torque equal to 25% and 13% of the maximum torque, corresponding to about what is required on a flat ground and with a load of 40 and 20 tons, the fuel saving obtained is equal to 25% and 10.2%, respectively.

Such results are summarized in the following table:

| | **LOAD** | **Cursor** | | |
|---|---|---|---|---|
| **Reference** | **75%** | **185** | gr/kW-Hr | **Δ%** |
| Cruise operations 85 km/Hr | **25%** | **206** | gr/kW-Hr | **10,2** |
| | **13%** | **235** | gr/kW-Hr | **21,3** |

The method described so far can be further improved.

According to a preferred alternative embodiment of the present invention, in the passive phase, the thermal engine is completely disconnected from the driveline. In such conditions, the internal frictions of the engine do not have any impact on the vehicle.

According to such preferred alternative embodiment, in the active phase the engine is brought to a rpm that is coherent with the vehicle speed and with the engaged gear, subsequently the clutch is closed and the engine delivers driving torque to the driveline.

During the passive phase the engine can be kept at idle or stopped.

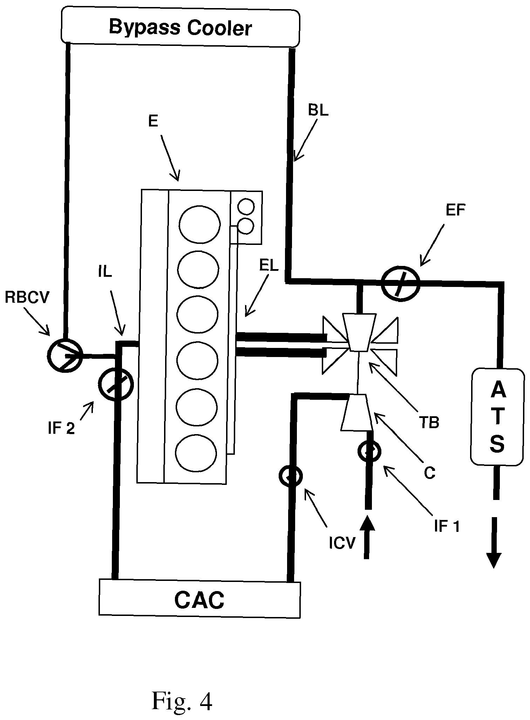

Figure 4 shows a first preferred alternative embodiment on an internal combustion engine particularly adapted to implement the aforementioned method.

According to such alternative embodiment, the engine is not disconnected from the driveline during the passive phase.

The engine E comprises an intake manifold IL and an exhaust manifold EL. Furthermore it is equipped with a turbo-supercharger assembly, for example, per se known.

With reference to the direction of circulation of the fresh air in the intake line, a first valve IF1 is present upstream of the supercharger C and a second valve IF2 is present just upstream of the intake manifold IL.

Furthermore, with reference to the direction of circulation of the gases leaving the engine, the engine is equipped with a bypass line BL having an inlet connected downstream of the turbine TB and upstream of the ATS and an outlet connected by means of a check valve RBCV to the intake manifold IL. Furthermore an EF valve is arranged on the exhaust line of the engine between the inlet of the bypass line BL and the ATS.

When the engine is in active phase, valves IF1, IF2 and EF are open, thus the air can flow, as usual, from the supercharger to the intake manifold and from the engine to the turbine and after that to the ATS.

When the engine is in passive phase and precisely in cut-off, the valves IF1, IF2 are closed, in order to maintain an overpressure in the intake manifold and the EF valve is closed in order to induce the air leaving the engine to come back to the engine, after passing through the turbine TB.

Advantageously, the air leaving the engine passes through the turbine keeping it in rotation, while at the intake the overpressure of the instant before the start of the passive phase is kept. When the active phase starts again, the pressure losses of the turbo-supercharger assembly are very limited, especially if the switching frequency between the phases is sufficiently high.

There are further advantages. The average temperature inside the engine is proportionally reduced in relation to the length of the passive phase on the whole period T. This affects the temperature of the cooling liquid, which can thus absorb less energy from the engine to be refrigerated. This has an impact also on a lower production of NOx gases, whose production is a function of the temperature reached in the engine.

In addition, since the engine is operated only with high torque values and with lower internal temperatures on average, then the EGR technique may result as completely useless.

If IF1, IF2 and EF valves are closed an instant after the cut-off, the air circulating in the bypass line is substantially clean and it is not particularly hot, thus it may be unnecessary to have a bypass cooler. On the contrary, if cut off and valve closing are simultaneous, then it can be necessary to cool the exhaust and hot gases that are recirculated to the engine. Since the same gases are recirculated more times during a passive phase, the bypass cooler needs to have a cooling capacity lower than a classic EGR cooler.

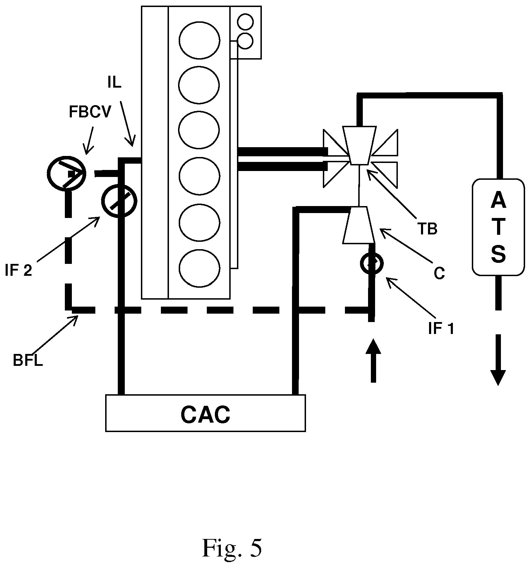

Figure 5 shows an alternative embodiment wherein the engine is disconnected from the driveline during the passive phase.

The supercharged engine has valves IF1 and IF2 as previously described, and a bypass line of fresh air having an inlet connected upstream of the IF1 valve on the intake line and an outlet connected to the intake manifold IL by means of a check valve FBCV. In the active phase the valves IF1 and IF2 are open.

In the passive phase they are closed, thus an overpressure is maintained in the intake line.

In the meanwhile the engine can suck air at atmospheric pressure directly from the intake filter (not shown), by means of the bypass line BFL, namely bypassing the segment where the supercharger C is arranged.

In this configuration, the engine is kept at idle or is stopped.

According to both alternative embodiments of figure 4 and 5, an intercooler CAC can be present.

According to another preferred alternative embodiment of the invention, the driveline comprises a flywheel to accumulate kinetic energy. Such solution can be particularly advantageous for vehicles with limited overall weight, such as automobiles, but for also industrial and commercial vehicles, when they travel empty.

According to a further preferred alternative embodiment of the invention, the thermal engine can be coupled with an electric motor-generator.

The motor-generator can in fact function as an electric generator during the active phase of the thermal engine, offering a high resistance torque and as a motor during the passive phase of the thermal engine, in order to compensate the torque losses deriving from the cut off of the thermal engine.

According to this preferred alternative embodiment, the batteries that are necessary to accumulate the energy are extremely small, since the energy is accumulated for a very short interval of time, to deliver it immediately after that. A switching period, in this case, can reach also a minute.

Another advantage deriving from the present alternative embodiment is that it is not necessary that the increase of the torque determines an increase of the speed of the thermal engine, and thus of the vehicle, since the increase of the driving torque can be fully absorbed from the motor-generator.

In such case, with reference to figure 3, the horizontal arrows disappear and the vertical arrows are reciprocally overlapped.

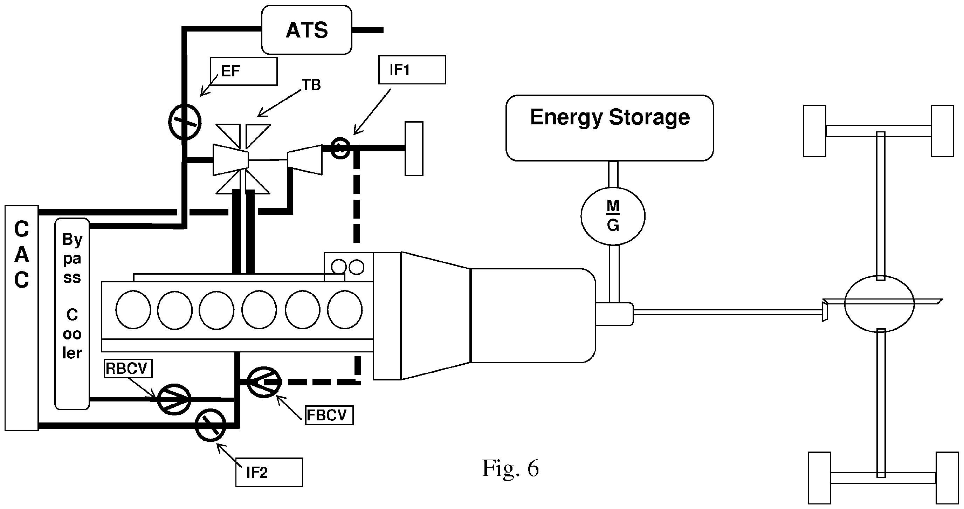

Figure 6 shows the alternative embodiment wherein an motor-generator is present, generically called "Energy Storage". This is because in general any motor can be adopted, for example hydraulic or pneumatic.

Preferably, however, both the resistance torque offered and the driving torque from/of the energy storage are variable and controllable. In case of an electric motor, for example, this can be immediately realized by means of an inverter.

The diagram of figure 6, although it is not based on the diagram of figure 5, can be realized also on the basis of the diagram of figure 4.

By virtue of the present invention, in case of an industrial vehicle that is able to carry up to 40 tons and equipped with a thermal engine that is able to deliver 2000-2300 Nm at a cruising speed of 85km/h (corresponding to about 1200 rpm), it is possible to use about 1000-1300 Nm of remaining torque - in order to reach the area with a lower specific consumption - to activate an electric engine. In this case, if the active phase lasts for example 2 seconds, about 2kW/h of energy are accumulated. According to the present invention, an heavy vehicle can be equipped with a battery pack having very low capacity and weight (about 3-5 kw/h) if compared to a traditional hybrid car, with an average specific consumption proportionally far better than the one that can be obtained by a traditional hybrid car.

The present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present application.

## Claims

1. Method for controlling an internal combustion engine comprising a step of controlling a torque delivery of the engine, by means of a modulation of the engine fuel supply, wherein said modulation is realized by means of a periodical or an aperiodical modulating function, wherein the duty cycle of said modulation is such that a desired torque (ET1, ET2) coincides with an average torque delivered over time and said periodical function identifies a torque delivery active phase (TAF) comprised between a torque value with the lowest specific consumption and 100% of the maximum torque and a passive phase wherein the engine runs at idle or is fully in cut off, wherein said torque delivered in active phase is a function of the value of the desired torque (ET1, ET2, ET) and **characterized in that** said modulation is realized when said desired torque is constant and/or increasing, when said desired torque is lower than a predefined percentage of the maximum torque and is inhibited when it is higher than said predefined percentage of the maximum torque.

2. Method according to claim 1, wherein said torque delivery control is of the PWM type.

3. Method according to claim 1, wherein said desired torque corresponds to a position of an accelerator pedal or lever.

4. Method according to claim 1, wherein said torque delivered in active phase (TAF) is increased proportionally with a value of desired torque (ET, ET1, ET2) when the desired torque exceeds a predefined threshold.

5. Method according to any one of the preceding claims, wherein said periodical function has a period (T) comprised between a fraction of a second and a minute.

6. Method according to any one of the previous claims, wherein said modulation is obtained by means of a modulating function of the
- ON/OFF step-shaped type and/or
- saw-tooth-shaped type.

7. Method according to any one of the preceding claims, further comprising a step of disconnecting an internal combustion engine from a respective driveline during said passive phase.

8. Method according to any one of the preceding claims, further comprising a step of increasing a resistance torque applied to the thermal engine during said active phase using means for accumulating mechanic/electric energy during said active phase and of releasing it during said passive phase, in order to limit the torque variations offered to the driveline and/or the speed variation of a vehicle implementing such method.

9. Method according to any one of the preceding claims, further comprising a step of maintaining an overpressure in the intake pipeline of the engine by means of appropriate valves (IF1, IF2, EF), during said passive phase.

10. Internal combustion engine comprising processing means configured to perform all the steps according to any one of the preceding claims.

11. Internal combustion engine (E) according to claim 10, comprising
- an intake manifold (IL) and
- an exhaust manifold (L),
- an ATS,
- a turbo-supercharger assembly (TB, C) and
- with reference to the direction of circulation of the fresh air, a first valve (IF1) on the intake line, upstream of the supercharger (C) and a second valve (IF2) just upstream of the intake manifold (IL), and
- with reference to the direction of circulation of the air leaving the engine, a bypass line (BL) having an inlet connected downstream of the turbine (TB) and upstream of the ATS at an outlet connected by means of a check valve (RBCV) to the intake manifold (IL),
- a third valve (EF) arranged on the exhaust line of the engine (E) between the inlet of the bypass line (BL) and the ATS, and
wherein said processing means are configured to open said first, second and third valve (IF1, IF2 and EF) during said active phase and to close them during said passive phase.

12. Internal combustion engine (E) according to claim 10, comprising
- an intake manifold (IL) and
- an exhaust manifold (L),
- an ATS,
- a turbo-supercharger assembly (TB, C) and
- with reference to the direction of circulation of the fresh air, a first valve (IF1) on the intake line, upstream of the supercharger (C) and a second valve (IF2) just upstream of the intake manifold (IL), and
- a bypass line (BFL) of fresh air having an inlet connected upstream of the first valve (EF1) on the intake line and an outlet of the intake manifold (IL) by means of a check valve (FBCV),
wherein said processing means are configured to open said first and second valve (IF1, IF2) during said active phase and to close them during said passive phase, in order to bypass the segment where the compressor (C) is arranged.

13. Internal combustion engine (E) according to any one of the claims from 10 to 12, wherein it is connected to a driveline and it is equipped with accumulation means of electric/mechanical energy, also connected to the driveline, and wherein said processing means are configured to increase a resistance torque applied to the internal combustion engine (E) during said active phase by means of accumulation means and to control a release of said energy during said passive phase, in order to limit the variations of the torque offered to the driveline and/or the speed variations of a vehicle implementing the method.

14. Internal combustion engine according to any one of the previous claims 10 - 13, further comprising means (Energy Storage) to absorb energy from the internal combustion engine during said active phase and to release it during said passive phase.

15. Computer program comprising program code means suitable adapted to perform all the steps of one of the claims from 1 to 9, when such program is run on a processing means as comprised by the engine according to claim 10.

16. Computer-readable means comprising a recorded program, said computer-readable means comprising program code means adapted to perform all the steps according to one of the claims from 1 to 9, when said program is run on a processing means as comprised by the engine according to claim 10.

17. Land or naval vehicle comprising the internal combustion engine (E) according to claims from 10 to 13.

## Patentansprüche

1. Verfahren zum Steuern eines Verbrennungsmotors, umfassend einen Schritt der Steuerung einer Drehmomentabgabe des Motors mithilfe einer Modulation der Motorbrennstoffversorgung, wobei die Modulation mittels einer periodischen oder einer aperiodischen Modulierfunktion durchgeführt wird, wobei der Arbeitszyklus der Modulation so gestaltet ist, dass ein gewünschtes Drehmoment (ET1, ET2) mit einem durchschnittlichen Drehmoment zusammenfällt, das im Zeitablauf abgegeben wird, und die periodische Funktion eine aktive Drehmomentabgabephase (torque delivery active phase, TAF), identifiziert, die sich zwischen einem Drehmomentwert mit dem niedrigsten spezifischen Verbrauch und 100 % des maximalen Drehmoments erstreckt, und eine passive Phase identifiziert, in welcher der Motor leerläuft oder vollständig ausgeschaltet ist, wobei das in aktiver Phase abgegebene Drehmoment eine Funktion des Werts des gewünschten Drehmoments (ET1, ET2, ET) ist und **dadurch gekennzeichnet, dass** die Modulation ausgeführt wird, wenn das gewünschte Drehmoment konstant ist und bzw. oder steigt, wenn das gewünschte Drehmoment niedriger ist als ein vorgegebener prozentualer Anteil des maximalen Drehmoments, und verhindert wird, wenn es höher als der vorgegebene prozentuale Anteil des maximalen Drehmoments ist.

2. Verfahren nach Anspruch 1, wobei die Drehmomentabgabesteuerung eine Steuerung des PWM-Typs ist.

3. Verfahren nach Anspruch 1, wobei das gewünschte Drehmoment einer Position eines Beschleunigungspedals oder -hebels entspricht.

4. Verfahren nach Anspruch 1, wobei das in der aktiven Phase (TAF) abgegebene Drehmoment proportional zu einem Wert des gewünschten Drehmoments (ET, ET1, ET2) erhöht wird, wenn das gewünschte Drehmoment eine vorgegebene Schwelle übersteigt.

5. Verfahren nach einem der vorhergehenden Ansprüche, wobei die periodische Funktion eine Periode (T) enthält, die zwischen dem Bruchteil einer Sekunde und einer Minute liegt.

6. Verfahren nach einem der vorherigen Ansprüche, wobei die Modulation mithilfe einer Modulationsfunktion des
- stufenförmigen EIN/AUS- Typs und bzw. oder
- des sägenzahnförmigen Typs erhalten wird.

7. Verfahren nach einem der vorhergehenden Ansprüche, ferner umfassend einen Schritt des Abtrennens eines Verbrennungsmotors von einem jeweiligen Antriebsstrang während der passiven Phase.

8. Verfahren nach einem der vorhergehenden Ansprüche, ferner umfassend einen Schritt der Erhöhung eines Widerstandsdrehmoments, das während der aktiven Phase am thermalen Motor angelegt wird, unter Anwendung eines Hilfsmittels zum Akkumulieren von mechanischer bzw. elektrischer Energie während der aktiven Phase und zu ihrer Freisetzung während der passiven Phase, um die Drehmomentvariationen, die am Antriebsstrang zur Verfügung stehen, und bzw. oder die Geschwindigkeitsvariation eines Fahrzeugs zu begrenzen, bei dem ein solches Verfahren implementiert ist.

9. Verfahren nach einem der vorhergehenden Ansprüche, ferner umfassend einen Schritt des Aufrechterhaltens eines Überdrucks in der Ansaugrohrleitung des Motors mithilfe von geeigneten Ventilen (IF1, IF2, EF) während der passiven Phase.

10. Verbrennungsmotor, umfassend Verarbeitungshilfsmittel, die konfiguriert sind, um alle Schritte nach einem der vorhergehenden Ansprüche auszuführen.

11. Verbrennungsmotor (E) nach Anspruch 10, umfassend
- einen Ansaugkrümmer (IL) und
- einen Absaugkrümmer (L),
- ein ATS,
- eine Turboladeranordnung (TB, C) und
- im Hinblick auf die Umlaufrichtung der Frischluft ein erstes Ventil (IF1) auf dem Ansaugstrang, dem Lader (C) vorgeschaltet, und ein zweites Ventil (IF2), dem Ansaugkrümmer (IL) direkt vorgeschaltet, und
- im Hinblick auf die Umlaufrichtung der den Motor verlassenden Luft eine Bypassleitung (BL) mit einem Einlass, welcher der Turbine (TB) nachgeschaltet und dem ATS vorgeschaltet an einem Auslass angeschlossen ist, der mittels eines Rückschlagventils (RBCV) am Ansaugkrümmer (IL) angeschlossen ist,
- ein drittes Ventil (EF), das am Absaugstrang des Motors (E) zwischen dem Einlass der Bypassleitung (BL) und dem ATS angeordnet ist, und
wobei die Verarbeitungshilfsmittel konfiguriert sind, um erstes, zweites und drittes Ventil (IF1, IF2 und EF) während der aktiven Phase zu öffnen und sie während der passiven Phase zu schließen.

12. Verbrennungsmotor (E) nach Anspruch 10, umfassend
- einen Ansaugkrümmer (IL) und
- einen Absaugkrümmer (L),
- ein ATS,
- eine Turboladeranordnung (TB, C) und
- im Hinblick auf die Umlaufrichtung der Frischluft ein erstes Ventil (IF1) auf dem Ansaugstrang, dem Lader (C) vorgeschaltet, und ein zweites Ventil (IF2), dem Ansaugkrümmer (IL) direkt vorgeschaltet, und
- eine Bypassleitung (BFL) der Frischluft mit einem Einlass, der, dem ersten Ventil (EF1) auf dem Ansaugstrang vorgeschaltet, angeschlossen ist, und mit einem Auslass des Ansaugkrümmers (IL) mittels eines Rückschlagventils (FBCV),
wobei die Verarbeitungshilfsmittel konfiguriert sind, um das erste und zweite Ventil (IF1, IF2) während der aktiven Phase zu öffnen und sie während der passiven Phase zu schließen, um das Segment zu umgehen, wo der Kompressor (C) angeordnet ist.

13. Verbrennungsmotor (E) nach einem der Ansprüche 10 bis 12, wobei er an einen Antriebsstrang angeschlossen ist und mit Akkumulationshilfsmittel für elektrische/mechanische Energie ausgerüstet ist, ebenfalls an den Antriebsstrang angeschlossen, und wobei die Verarbeitungseinrichtungen konfiguriert sind, um ein Widerstandsdrehmoment zu erhöhen, das am Verbrennungsmotor (E) während der Aktivphase mithilfe von Akkumulationshilfsmitteln angewandt wird, und um eine Freisetzung der Energie während der passiven Phase zu steuern, um die am Antriebsstrang zur Verfügung stehenden Drehmomentvariationen und bzw. oder die Geschwindigkeitsvariationen eines Fahrzeugs zu begrenzen, bei dem dieses Verfahren implementiert wird.

14. Verbrennungsmotor nach einem der vorherigen Ansprüche 10 - 13, ferner umfassend Hilfsmittel (Energiespeicherung) zum Absorbieren von Energie aus dem Verbrennungsmotor während der aktiven Phase und ihre Freisetzung während der passiven Phase.

15. Computerprogramm, umfassend Programmcodehilfsmittel, die angepasst sind, um alle Schritte von einem der Ansprüche 1 bis 9 durchzuführen, wenn ein solches Programm auf einer Verarbeitungsvorrichtung läuft, wie sie der Motor nach Anspruch 10 aufweist.

16. Computerlesbare Hilfsmittel, umfassend ein aufgezeichnetes Programm, wobei die computerlesbaren Hilfsmittel Programmcodemittel umfassen, die angepasst sind, um alle Schritte nach einem der Ansprüche 1 bis 9 durchzuführen, wenn das Programm auf einer Verarbeitungsvorrichtung läuft, wie sie der Motor nach Anspruch 10 umfasst.

17. Land- oder Seefahrzeug, umfassend den Verbrennungsmotor (E) nach den Ansprüchen 10 bis 13.

## Revendications

1. Procédé pour commander un moteur à combustion interne comprenant une étape qui consiste à commander une délivrance de couple du moteur, au moyen d'une modulation de l'alimentation en carburant du moteur, dans lequel ladite modulation est réalisée au moyen d'une fonction de modulation périodique ou d'une fonction de modulation apériodique, dans lequel le rapport cyclique de ladite modulation est tel qu'un couple souhaité (ET1, ET2) coïncide avec un couple moyen qui est délivré au fil du temps et ladite fonction périodique identifie une phase active de délivrance de couple (TAF) qui est comprise entre une valeur de couple avec la consommation spécifique la plus faible et 100 % du couple maximum et une phase passive dans laquelle le moteur fonctionne au ralenti ou est complètement coupé, dans lequel ledit couple qui est délivré dans la phase active est une fonction de la valeur du couple souhaité (ET1, ET2, ET), et **caractérisé en ce que** ladite modulation est réalisée lorsque ledit couple souhaité est constant et/ou en augmentation, lorsque ledit couple souhaité est plus faible qu'un pourcentage prédéfini du couple maximum, et est inhibée lorsqu'il est plus élevé que ledit pourcentage prédéfini du couple maximum.

2. Procédé selon la revendication 1, dans lequel ladite commande de délivrance de couple est du type MLI.

3. Procédé selon la revendication 1, dans lequel ledit couple souhaité correspond à une position d'une pédale d'accélérateur ou d'un levier d'accélérateur.

4. Procédé selon la revendication 1, dans lequel ledit couple qui est délivré en phase active (TAF) est augmenté proportionnellement à une valeur de couple souhaité (ET, ET1, ET2) lorsque le couple souhaité dépasse un seuil prédéfini.

5. Procédé selon l'une quelconque des revendications qui précèdent, dans lequel ladite fonction périodique présente une période (T) qui est comprise entre une fraction d'une seconde et une minute.

6. Procédé selon l'une quelconque des revendications qui précèdent, dans lequel ladite modulation est obtenue au moyen d'une fonction de modulation
- du type MARCHE/ARRET en forme de marche et/ou
- du type en forme de dents de scie.

7. Procédé selon l'une quelconque des revendications qui précèdent, comprenant en outre une étape de déconnexion d'un moteur à combustion interne vis-à-vis d'une chaîne cinématique respective pendant ladite phase passive.

8. Procédé selon l'une quelconque des revendications qui précèdent, comprenant en outre une étape qui consiste à augmenter un couple de résistance qui est appliqué au moteur thermique pendant ladite phase active en utilisant un moyen pour accumuler de l'énergie mécanique/électrique pendant ladite phase active et à la libérer pendant ladite phase passive, afin de limiter les variations de couple appliquées à la chaîne cinématique et/ou la variation de vitesse d'un véhicule qui met en oeuvre ce procédé.

9. Procédé selon l'une quelconque des revendications qui précèdent, comprenant en outre une étape de maintien d'une surpression dans la conduite d'admission du moteur au moyen de soupapes appropriées (IF1, IF2, EF), pendant ladite phase passive.

10. Moteur à combustion interne comprenant un moyen de traitement qui est configuré de manière à réaliser toutes les étapes selon l'une quelconque des revendications qui précèdent.

11. Moteur à combustion interne (E) selon la revendication 10, comprenant
- une tubulure d'admission (IL) et
- une tubulure d'échappement (L),
- un ATS,
- un ensemble de turbocompresseur de suralimentation (TB, C)et
- par référence au sens de circulation de l'air extérieur, une première soupape (IF1) sur la conduite d'admission, en amont du turbocompresseur de suralimentation (C) et une deuxième soupape (IF2) juste en amont de la tubulure d'admission (IL), et
- par référence au sens de circulation de l'air qui quitte le moteur, une ligne de contournement (BL) qui comporte une entrée qui est connectée en aval de la turbine (TB) et en amont de l'ATS au niveau d'une sortie qui est connectée au moyen d'une soupape antiretour (RBCV) à la tubulure d'admission (IL) ;
- une troisième soupape (EF) qui est agencée sur la ligne d'échappement du moteur (E) entre l'entrée de la ligne de contournement (BL) et l'ATS, et
dans lequel ledit moyen de traitement est configuré de manière à ouvrir lesdites première, deuxième et troisième soupapes (IF1, IF2 et EF) pendant ladite phase active et à les fermer pendant ladite phase passive.

12. Moteur à combustion interne (E) selon la revendication 10, comprenant
- une tubulure d'admission (IL), et
- une tubulure d'échappement (L),
- un ATS,
- un ensemble de turbocompresseur de suralimentation (TB, C) et
- par référence au sens de circulation de l'air extérieur, une première soupape (IF1) sur la conduite d'admission, en amont du turbocompresseur de suralimentation (C) et une deuxième soupape (IF2) juste en amont de la tubulure d'admission (IL), et
- une ligne de contournement (BFL) d'air extérieur qui comporte une entrée qui est connectée en amont de la première soupape (EF1) sur la conduite d'admission et une sortie de la tubulure d'admission (IL) au moyen d'une soupape antiretour (FBCV),
dans lequel ledit moyen de traitement est configuré de manière à ouvrir lesdites première et deuxième soupapes (IF1, IF2) pendant ladite phase active et à les fermer pendant ladite phase passive, afin de contourner le segment au niveau duquel le compresseur (C) est agencé.

13. Moteur à combustion interne (E) selon l'une quelconque des revendications 10 à 12, dans lequel il est connecté à une chaîne cinématique et il est équipé d'un moyen d'accumulation de l'énergie électrique/mécanique, également connecté à la chaîne cinématique, et dans lequel ledit moyen de traitement est configuré de manière à augmenter un couple de résistance qui est appliqué au moteur à combustion interne (E) pendant ladite phase active au moyen du moyen d'accumulation et de manière à commander une libération de ladite énergie pendant ladite phase passive, afin de limiter les variations du couple appliquées à la chaîne cinématique et/ou les variations de vitesse d'un véhicule qui met en oeuvre le procédé.

14. Moteur à combustion interne selon l'une quelconque des revendications 10 à 13, comprenant en outre un moyen (de stockage d'énergie) pour absorber l'énergie qui provient du moteur à combustion interne pendant ladite phase active et pour la libérer pendant ladite phase passive.

15. Programme informatique comprenant un moyen de code de programme qui est adapté de manière à réaliser toutes les étapes de l'une des revendications 1 à 9, lorsque ce programme est exécuté sur un moyen de traitement tel que compris par le moteur selon la revendication 10.

16. Moyen lisible par ordinateur comprenant un programme enregistré, ledit moyen lisible par ordinateur comprenant un moyen de code de programme qui est adapté de manière à réaliser toutes les étapes de l'une des revendications 1 à 9, lorsque ledit programme est exécuté sur un moyen de traitement tel que compris par le moteur selon la revendication 10.

17. Véhicule terrestre ou naval comprenant le moteur à combustion interne (E) selon les revendications 10 à 13.
